# EUROPÄISCHE PATENTSCHRIFT

(11) **EP 1 932 416 B1**
(45) Veröffentlichungstag und Bekanntmachung des Hinweises auf die Patenterteilung: **07.11.2012**
(21) Anmeldenummer: 07023919.9
(22) Anmeldetag: 11.12.2007
(51) Int. Cl.: A01D 41/14, A01B 73/06

(54) **Vorrichtung mit einer ersten und einer zweiten Arbeitseinheit**
Device comprising a first and a second work unit
Dispositif muni d'une première et d'une seconde unité de travail

(30) Priorität: 15.12.2006 DE 102006059797
(43) Veröffentlichungstag der Anmeldung: 18.06.2008
(73) Patentinhaber: CLAAS Saulgau GmbH, 88348 Bad Saulgau (DE)
(72) Erfinder: Boll, Ulrich, 88348 Bad Saulgau (DE)
(74) Vertreter: Otten, Roth, Dobler & Partner

(56) Entgegenhaltungen:
- EP-A- 1 504 650
- EP-A- 1 576 870
- CA-A1- 2 229 152
- DE-A1- 4 322 263
- DE-T2- 60 113 599
- DE-U1-202006 019 070

## Beschreibung

Die Erfindung betrifft eine Vorrichtung zum Bearbeiten eines landwirtschaftlichen Feldes und/oder von auf dem Feld angeordneten Pflanzen, insbesondere zur frontseitigen Anordnung an einem landwirtschaftlichen Fahrzeug, mit einer ersten, wenigstens ein erstes Arbeitsorgan aufweisenden Arbeitseinheit und einer zweiten, wenigstens ein zweites Arbeitsorgan aufweisendes Arbeitseinheit nach dem Oberbegriff des Anspruchs 1.

Um die Bearbeitung landwirtschaftlicher Flächen möglichst ökonomisch und zügig durchzuführen, ist es wünschenswert, dass die Arbeitsgeräte eine möglichst große Arbeitsbreite aufweisen. Dementsprechend werden in den letzten Jahren die Arbeitsbreiten von entsprechenden Arbeitsgeräten bzw. Erntevorsätzen oder dergleichen immer größer.

Allerdings ist für ein Straßenverkehrsmittel, wie es landwirtschaftliche Fahrzeuge auch sind, nur eine begrenzte Breite während des Straßenbetriebs z.B. zum Erreichen verstreut liegender Felder erlaubt, so dass das Arbeitsfahrzeug während des Straßenbetriebs diese zulässige Breite nicht überschreiten darf. Es ist deshalb notwendig, dass Arbeitseinheiten von einer Arbeitsstellung mit möglichst großer Arbeitsbreite in eine Transportsstellung gebracht werden können, die im Rahmen der zulässigen Breite für ein Straßenverkehrsmittel bleibt.

Zum Verstellen der Arbeitseinheiten zwischen einer Arbeits- und einer Transportsstellung sind bereits unterschiedlichste Systeme bzw. Techniken bekannt. Beispielsweise ist gemäß der DE 1 482 095 aus dem Jahr 1961, bereits eine Mähmaschine bekannt, die drei Mäheinheiten, insbesondere Mähbalken, aufweist, wobei der mittlere Mähbalken für die Transportstellung um eine Drehachse verschwenkt wird und die zwei außenliegenden Mähbalken um eine vertikale Hochachse nach innen verschwenkt werden. Hierbei sind die äußeren Mähbalken in der Transportstellung über dem zentralen Mähbalken angeordnet.

Weiterhin ist aus der DE 43 22 263 B4 ein Arbeitsgerät, insbesondere ein Mähwerk bekannt, das ebenfalls drei Arbeitseinheiten aufweist. Hierbei wird das zentrale Mähwerk für die Transportsstellung mittels einer Schwinge um eine quer zur Fahrtrichtung und im Wesentlichen horizontal ausgerichtete Schwenkachse derart weit nach oben verschwenkt, dass die beiden äußeren Mähwerke, die wiederum um vertikale Hochachsen verschwenkbar sind, unterhalb des zentralen Mähwerks positioniert werden können.

Nachteilig bei einem Verschwenken bzw. einer Schwinge ist jedoch, dass durch die Rotation beim Verschwenken die entsprechende Arbeitseinheit in der herabgesenkten Position zwangsweise auch eine Bewegung nach vorne aufweist. Dies führt unter anderem zu ungünstigen Belastungen und zu einer Reduzierung der Wendigkeit der gesamten Fahrzeugeinheit.

Großer Vorteil bei bisherigen, um Rotationsachsen rotierende Arbeitseinheiten ist, dass das Antriebssystem für derartig rotatorisch verstellte Arbeitseinheiten konstruktiv einfach ausgeführt werden kann, in dem beispielsweise eine Drehachse eines Kettenblatts, einer Riemenscheibe, eines Kardangelenks oder dergleichen fluchtend zur Schwenkachse der Arbeitseinheit angeordnet ist.

Darüber hinaus ist aus der DE 10 2004 022 534 A1 ein Maishäcksler bekannt, wobei dieser drei als Mäh- und Einzugseinheiten ausgebildete Arbeitseinheiten aufweist. Hierbei werden die beiden außenliegenden Arbeitseinheiten um im Wesentlichen in Fahrtrichtung gerichtete Drehachsen derart verschwenkt, dass diese für die Transportstellung über die starre, zentrale Arbeitseinheit angeordnet werden.

Nachteilig bei einer derartigen Verstelleinheit ist jedoch, dass bei vergleichsweise hoher. Arbeitseinheiten die Gesamthöhe von drei übereinander gestapelten Arbeitseinheiten so groß ist, dass bei einer frontseitigen Anordnung an einem Arbeitsfahrzeug die Sicht für den Fahrer eingeschränkt wird.

Vorteil bei dieser Art der Anordnung der Arbeitseinheiten in Arbeitsstellung auf gleicher Höhe in Fahrtrichtung betrachtet ist jedoch, die sehr kompakte Ausbildung des gesamten landwirtschaftlichen Arbeitsfahrzeugs während der Arbeit und des Transportes, was sowohl zu einer hohen Wendigkeit bzw. Kompaktheit sowie auch zu einer günstigen Anordnung des Schwerpunktes des Arbeitsgerätes und somit einer vorteilhaften Achsbelastung führt.

Die Druckschrift EP 15 04 650 zeigt eine landwirtschaftliche Vorrichtung mit drei Arbeitseinheiten, die in Transportstellung teilweise übereinander angeordnet sind.

Die zentrale Arbeitseinheit wird mittels der Anhängekupplung für die Transportstellung angehoben. Hierbei wird eine rotatorische Schwenkbewegung realisiert. So sind zwei Ausführungsvarianten offenbart, wobei die beiden äußeren Arbeitseinheiten für die Transportstellung nach oben oder nach vorne verschwenkbar sind.

Die Druckschrift CA 2 229 151 offenbart eine Feldspritze mit einer Hubeinheit, die dafür verwendet wird, dass die Höhe des Gestänges mit den Düsen in Bezug zum Boden bzw. zu den Pflanzen einstellbar ist. Dies ist bei entsprechenden Feldspritzen seit langem gebräuchlich, um die Ausbringung der Flüssigkeit zu optimieren bzw. unnötige Umweltbelastungen zu vermeiden. Hierbei existieren entsprechende Rechtsvorschriften, um den Anteil der Abtrift- bzw. des Streunebals der giftigen Chemikalien zu begrenzen.

Darüber hinaus zeigt die Druckschrift DE 601 13 599 T2 eine Lineareinheit zum. Vertellen einer Arbeitseinheit bei einer landwirtschaftlichen Arbeitsmaschine. Bei einer Variante der landwirtschaftlichen Arbeitsmaschine sind nur zwei Arbeitseinheiten vorgesehen, wobei die Arbeitseinheiten linear zwischen einer Arbeits- und einer Transportstellung verstellt werden. So ist die Linearverstelleinheit dafür vorgesehen, eine erste Arbeitseinheit in die Transportstellung anzuheben, damit die zweite Arbeitseinheit von einer seitlichen, auskragenden Arbeitsposition in eine zentrale bzw. mittige Transportstellung verstellbar ist.

Allerdings kann mit einer derartigen Vorrichtung, mit nur zwei Arbeitseinheiten auch nur eine vergleichsweise geringe Arbeitsbreite realisiert werden, da hiermit maximal das

Zweifache der zulässigen Transportbreite von Fahrzeugen realisiert werden kann.

Um die Arbeitsbreite der Arbeitseinheiten zu vergrößern, offenbart diese Druckschrift auch eine weitere Ausführungsform mit drei Arbeitseinheiten, wobei jedoch keine lineare Verstelleinheit zum geradlinigen Verstellen einer der Arbeitseinheiten vorgesehen ist. Vielmehr wird hier, wie zum Teil in der Landwirtschaft bereits seit längerem gebräuchlich, eine Verstellung der äußeren Arbeitseinheiten durch einen Schwenkmechanismus, hier mittels einem Gelenkhebel-SchwenkMechanismus, in eine obere, über der zentralen Arbeitseinheit vorgesehene Transportstellung offenbart.

Gegenüber diesem Stand der Technik hat die vorliegende Erfindung die Aufgabe, eine Vorrichtung vorzuschlagen, wobei eine große Arbeitsbreite und zudem eine besonders kompakte Anordnung von vorzugsweise drei Arbeitseinheiten in der Transportstellung mit einem Schwerpunkt möglichst nahe am Fahrzeug bzw. an einer Achse des Fahrzeugs realisiert ist.

Diese Aufgabe wird, ausgehend von einer Vorrichtung nach dem Oberbegriff des Anspruchs 1, durch dessen Merkmale gelöst. Durch die in den Unteransprüchen genannten Maßnahmen sind vorteilhafte Ausführungen und Weiterbildungen der Erfindung möglich.

Dementsprechend zeichnet sich eine erfindungsgemäße Vorrichtung dadurch aus, dass die Verstelleinrichtung wenigstens eine Lineareinheit zur im Wesentlichen gradlinigen Translation wenigstens einer der Arbeitseinheiten aufweist, wobei die Lineareinheit als Hubeinheit zum im Wesentlichen vertikalen Anheben einer der Arbeitseinheiten ausgebildet ist, wobei in Transportstellung die zweite und eine dritte wenigstens ein drittes Arbeitsorgan aufweisende Arbeitseinheit im Wesentlichen in Fahrtrichtung ausgerichtet sind. Mit Hilfe einer derartig translatorisch verstellten Arbeitseinheit ist es möglich, vorzugsweise die zentrale Arbeitseinheit beispielsweise vertikal derart anzuheben, dass diese sowohl in der Arbeits- als auch in der Transportstellung sehr nahe am Arbeitsfahrzeug bzw. an dessen Achse, insbesondere Vorderachse, angeordnet ist. Hierdurch wird sowohl in Arbeitsals auch in Transportsstellung eine vorteilhafte Lage des Schwerpunkts der zentralen Arbeitseinheit realisierbar.

Es hat sich gezeigt, dass eine derartige Anordnung gerade bei vergleichsweise große Arbeitsbreiten aufweisende Arbeitseinheiten eine besonders zweckdienliche Anordnung darstellt. Dementsprechend kann eine vergleichsweise große gesamte Arbeitsbreite realisiert werden.

Darüber hinaus wird mittels einer translatorisch verstellten Arbeitseinheit gemäß der Erfindung erreicht, dass beispielsweise die weitere oder z.B. zwei äußere Arbeitseinheiten unter der in der Transportstellung oben angeordneten Arbeitseinheit positionierbar ist/sind, ohne dass die Sicht des Fahrers beim Transport beeinträchtigt wird. Entsprechend entspricht gemäß der Erfindung die Transporthöhe der erfindungsgemäßen Vorrichtung in etwa der zweifachen Höhe einer Arbeitseinheit, selbst bei der Verwendung von drei Arbeitseinheiten. Im Gegensatz hierzu wird beispielsweise gemäß der DE 10 2004 022 534 A1 bei drei Arbeitseinheiten eine Transporthöhe realisiert, die etwa dem dreifachen einer Arbeitseinheit entspricht.

Zur Realisierung der translatorischen Verstellung der Arbeitseinheit, ist es auch denkbar, dass beispielsweise wenigstens eine oder die (beiden) äußeren Arbeitseinheiten translatorisch verstellt werden könnten.

Grundsätzlich können unterschiedlichste Antriebs- und/oder Führungssysteme verwendet werden. Beispielsweise kann eine Gleit- und/oder Wälzführung und/oder Linearantriebe vorgesehen werden. Als Linearantriebe sind beispielsweise Gewindeantriebe, Linearmotoren, elektromechanische Zylinder, Ketten- oder Seilantriebe und/oder vorzugsweise Pneumatik- oder Hydraulikantriebe verwendbar.

Erfindungsgemäß ist die Lineareinheit als Hubeinheit zum im Wesentlichen vertikalen Anheben wenigstens einer der Arbeitseinheiten ausgebildet. Beispielsweise könnte die Hubeinheit ein Ketten- oder Seilantrieb aufweisen. Vorzugsweise wird die Hubeinheit mit Hilfe wenigstens eines pneumatischen oder vorzugsweise hydraulischen Hubzylinders realisiert. Hydrauliksysteme mit Hydraulikzylindern sind in der Landwirtschaft bereits vielfach im Einsatz, so dass hier auf bereits vorhandene Komponenten und vor allem auch auf entsprechende Antriebs- bzw. Verbindungssysteme mit dem landwirtschaftlichen Fahrzeug zurückgegriffen werden kann.

In einer besonderen Weiterbildung der Erfindung ist vor allem für die translatorisch verstellbare Arbeitseinheit ein Antriebssystem vorgesehen, das längenveränderbar ausgebildet ist. Beispielsweise sind teleskopierbare Antriebskomponenten und/oder Kupplungseinheiten denkbar, die zur Realisierung der Längenveränderung gegebenenfalls außer Eingriff gehen bzw. zwei Komponenten aufweisen, die in der Transportstellung voneinander beabstandet sind und in der Arbeitsstellung im Eingriff bzw. formschlüssig miteinander verbunden sind.

Vorteilhafterweise weist die Verstelleinrichtung wenigstens eine Schwenkeinheit zum Verschwenken wenigstens einer der Arbeitseinheiten um eine, insbesondere im Wesentlichen vertikal ausgerichtete Schwenkachse auf. Beispielsweise werden die zweite und/oder eine dritte Arbeitseinheit mittels einer derartigen Schwenkachse von der Arbeitsstellung in die Transportsstellung verschwenkt.

Vorzugsweise entspricht die Arbeitsbreite der ersten Arbeitseinheit im Wesentlichen deren Transportbreite. Insbesondere entspricht die Arbeits- bzw. Transportbreite der ersten Arbeitseinheit im Wesentlichen der zulässigen Transportbreite auf öffentlichen Straßen. Hiermit wird erreicht, dass die Gesamtarbeitsbreite möglichst groß wird.

In einer bevorzugten Variante der Erfindung sind die Arbeitseinheiten wenigstens in Arbeitsstellung im Wesentlichen auf einer Höhe bezogen auf die Fahrtrichtung angeordnet. Gerade mit Hilfe der tranlatorischen Verstellung wenigstens einer der Arbeitseinheiten, insbesondere der zentralen Arbeitseinheit, wird mit Hilfe dieser Maßnahme ermöglicht, dass der Schwerpunkt der gesamten Vorrichtung sowohl in Transportsstellung als auch in Arbeitsstellung vergleichsweise nahe am Fahrzeug bzw. an der Vorderachse des Fahrzeugs angeordnet ist. Dies führt beispielsweise zu einer vorteilhaften Reduktion der Achslast, die auf öffentlichen Straßen ebenfalls begrenzt ist. Bei besonders großen landwirtschaftlichen Fahrzeugen mit großen Arbeitsvorrichtungen wird dies zunehmend zu einem der limitierenden Faktoren. Auch auf dem Feld ist eine möglichst geringe Achslast bzw. eine gleichmäßigere Verteilung der Achslasten von Vorteil, insbesondere bezüglich der Verdichtung des Bodens.

Vorteilhafterweise sind in Transportstellung die zweite und/oder die dritte Arbeitseinheit innerhalb der Transportbreite der ersten Arbeitseinheit angeordnet. Hiermit wird eine besonders kompakte Ausbildung der Vorrichtung gemäß der Erfindung in Transportstellung erreicht.

Vorzugsweise entspricht die Transportbreite der Vorrichtung im Wesentlichen der Breite des dafür vorgesehenen Fahrzeugs oder ist etwas kleiner als diese. Hiermit wird eine möglichst maximale Ausnützung der zulässigen Transportbreite erreicht, was entsprechend zu einer besonders großen Arbeitsbreite führt.

Generell kann beispielsweise die translatorisch verstellte Arbeitseinheit in der Transportstellung eine Lage aufweisen, die unterhalb der maximal anhebbaren Lage dieser Arbeitseinheit ist. Beispielsweise wird die translatorisch verstellte Arbeitseinheit, in einer Zwischenstellung in maximaler, angehobener Position positioniert, zumindest während die andere bzw. die anderen Arbeitseinheiten von deren Arbeitsstellung in die Transportstellung verstellt werden. Anschließend kann beispielsweise die tranlatorisch verstellte bzw. angehobene Arbeitseinheit auf die vorzugsweise darunter angeordneten Arbeitseinheiten herabgesenkt werden, bis diese sich gegebenenfalls berühren. Dies verbessert die Stabilität und Kompaktheit der Arbeitseinheiten in der Transportellung.

Grundsätzlich können als Arbeitseinheiten unterschiedlichste Arbeitswerkzeuge verwendet werden. Es ist beispielweise denkbar, für einen Mähdrescher einen Mähdreschervorsatz gemäß der Erfindung auszubilden, wobei die frontseitig angeordnete Arbeitsvorrichtung, nicht wie bislang üblich bei Mähdreschern mit großer Arbeitsbreite komplett als eine Baueinheit vom Frontbereich entfernt und als Anhänger während der Transportphase am Mähdrescher angehängt wird, sondern entsprechend geteilt, insbesondere dreigeteilt, und ein Teil translatorisch angehoben und die anderen Teile um z.B. im Wesentlichen vertikale Achsen verschwenkbar sind.

Vorteilhafterweise sind Arbeitseinheiten als Aufnahmeeinheiten mit jeweils wenigstens einer Mehrzahl über deren Arbeitsbreite verteilter und in Arbeitsstellung um eine quer zur Fahrtrichtung ausgerichtete Drehachse umlaufender sowie voneinander beabstandeter Aufnahmeelemente zum Aufnehmen von am Boden liegendem Erntegut ausgebildet. Derartige Aufnahmeeinheiten werden in der Landwirtschaft gewöhnlich als sogenannte "Pick-Up" bezeichnet. Gemäß der Erfindung kann beispielsweise eine vorzugsweise frontseitig am Fahrzeug anordenbare Pick-Up realisiert werden, die Arbeitsbreiten aufweist, die weit über dem bislang üblichen Maß hinausgeht. Beispielsweise können Vorrichtungen gemäß der Erfindung mit Arbeitsbreiten von ca. 8 m oder mehr realisiert werden, die in der Transportstellung kompakt und mit einem nahen Schwerpunkt insbesondere frontseitig am Fahrzeug anordnenbar ist.

Alternativ können die Arbeitseinheiten auch als Mähwerke, insbesondere mit in Arbeitsstellung um im Wesentlichen vertikal ausgerichtete Drehachsen drehende Mähwerkzeuge bzw. Schneidmesser, ausgebildet werden. Vorzugsweise weisen die Mähwerke Mähwerkzeuge in Arbeitsstellung auf, wobei sich die Flugkreise der zueinander benachbazten Mähwerkzeuge in der Arbeitsstellung überlappen. Derartige Scheiben- oder Trommelmähkomponenten sind in der Landwirtschaft bereits üblich, so dass auf bereits handelsübliche Komponenten zurückgegriffen werden kann. Dies führt beispielsweise zu einem besonders wirtschaftlich günstigen Mähwerk mit vorzugsweise fluchtend angeordneten Einzelmähwerken in Arbeitsstellung.

Weiterhin können alternativ die Arbeitseinheiten als Mäh- und Einzugseinheiten mit in Arbeitsstellung um im Wesentlichen vertikal ausgerichtete Drehachsen drehende Mäh- und Einzugswerkzeugen ausgebildet werden. Derartige Mäh- und Einzugseinheiten sind beispielsweise als sogenannte Maisvorsätze oder dergleichen verwendbar, wobei die Pflanzen einerseits abgemäht und andererseits in den Häcksler bzw. den Drescher eingezogen werden.

Vorteilhafterweise ist wenigstens eine Querfördereinheit zum wenigstens teilweise quer zur Fahrtrichtung gerichteten Fördern der Pflanzen bzw. von Erntegut vorgesehen. Gerade bei Arbeitsvorrichtungen gemäß der Erfindung mit sehr großer Arbeitsbreite ist es mit Hilfe dieser Querfördereinheit möglich, die Pflanzen bzw. das Erntegut zu wenigstens einer zentralen bzw. einzigen Stelle quer zur Fahrtrichtung zu fördern, an der/den dann die Weiterverarbeitung der Pflanzen bzw. des Erntegut erfolgen kann.

In einer bevorzugten Ausführungsform der Erfindung weist die Querfördereinheit wenigstens eine in Arbeitsstellung um eine quer zur Fahrtrichtung ausgerichtete Rotationsachse rotierende Förderschnecke auf. Es hat sich gezeigt, dass eine derartige Förderschnecke für entsprechend große Arbeitsbreiten von besonderem vorteil ist. Alternativ hierzu sind auch Bandförderer oder dergleichen denkbar.

Vorzugsweise weist jede der Arbeitseinheiten eine entsprechende Querfördereinheit bzw. eine entsprechende Förderschnecke auf, die insbesondere in Fahrtrichtung betrachtet auf gleicher Höhe in der Arbeitsstellung angeordnet sind.

Generell kann ein entsprechendes landwirtschaftliches Fahrzeug sowohl als Selbstfahrer oder als Zugmaschine wie Traktor etc. zum Ankoppeln der Vorrichtung gemäß der Erfindung ausgebildet werden.

Vorzugsweise weist ein entsprechendes landwirtschaftliches Fahrzeug eine Häckselvorrichtung zum Häckseln der Pflanzen bzw. des Ernteguts und/oder eine Dreschvorrichtung zum Dreschen der Pflanzen bzw. des Ernteguts auf. Entsprechend können Häcksler bzw. Dreschfahrzeuge realisiert werden, die eine sehr große Arbeitsbreite aufweisen und trotzdem in der Transportstellung kompakt ausgebildet sind.

Ein Ausführungsbeispiel der Erfindung ist in der Zeichnung dargestellt und wird anhand der Figuren nachfolgend näher erläutert.

Im Einzelnen zeigt:
- Figur 1: eine schematische Frontansicht eines Feldhäckslers mit dreiteiliger Aufnahmevorrichtung in Arbeitsstellung,
- Figur 2: eine schematische Seitenansicht eines Feldhäckslers gemäß Figur 1,
- Figur 3: eine schematische Frontansicht des Feldhäckslers gemäß Figur 1 in einer ersten Zwischenstellung mit gehobenem Mittelteil,

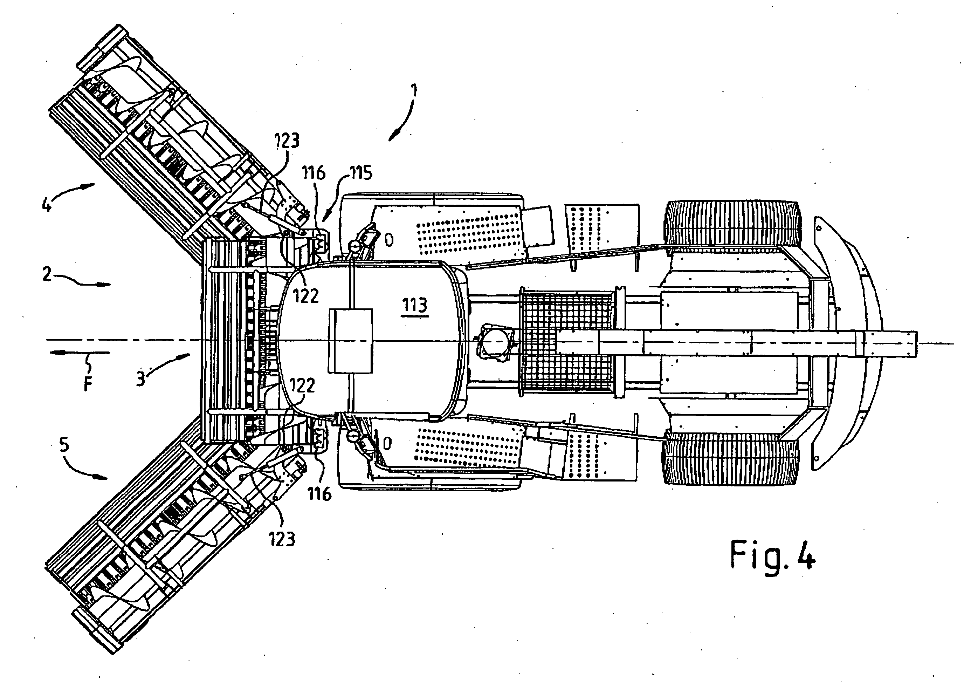

- Figur 4: eine schematische Draufsicht des Feldhäckslers gemäß Figur 1 in einer zweiten Zwischenstellung mit gehobenem Zwischenteil und teilweise eingeschwenkten Außenteilen,
- Figur 5: eine schematische Seitenansicht des Feldhäckslers gemäß Figur 1 in Transportstellung und
- Figur 6: eine schematische Draufsicht des Feldhäckslers gemäß Figur 1 in Transportstellung.

Ein beispielhaft als Feldhäcksler 1 ausgebildetes multifunktionales landwirtschaftliches Fahrzeug zeigt eine mehrteilige Vorrichtung 2 gemäß der Erfindung. Der Feldhäcksler 1 entspricht beispielsweise einem bereits handelsüblichen Feldhäcksler 1, der unter der Bezeichnung "JAGUAR" der Anmelderin bereits vielfach im Einsatz ist.

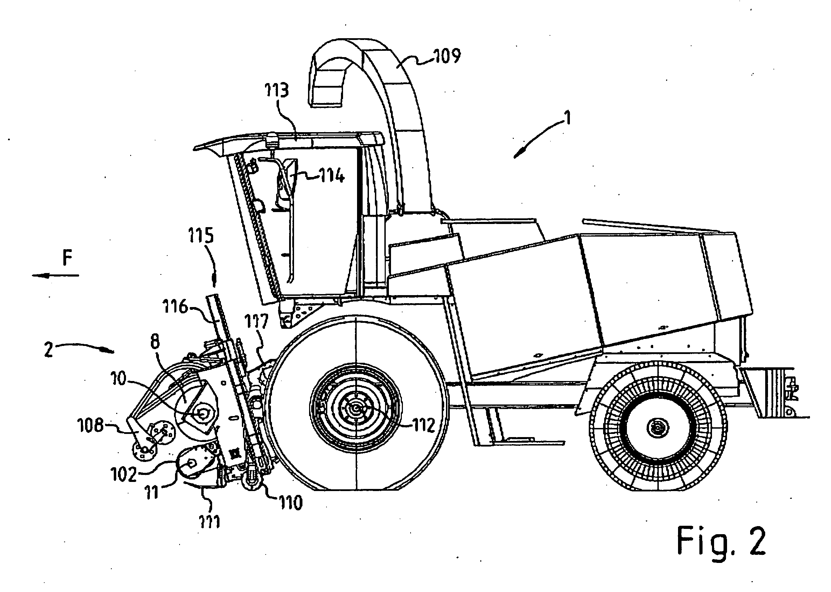

Der Feldhäcksler 1 nimmt eine Vorrichtung 2 gemäß der Erfindung auf, die als sogenannte "Pick-Up" ausgebildet ist. Die Vorrichtung 2 umfasst insgesamt drei Arbeits- bzw. Aufnahmeeinheiten, eine zentrale Einheit 3 sowie zwei Seiteneinheiten 4, 5. Querförderschnecken 6, 7, 8 dienen dazu, aufgenommenes Erntegut einem zentralen Einzug 9 zuzuführen. Die Lage einer Drehachse 10 oberhalb einer Drehachse 11 für die umlaufenden, lediglich aus Gründen der Übersichtlichkeit hier nicht näher dargestellten Förderzinken ist in der Darstellung gemäß Figur 2 gut erkennbar.

Die nicht näher dargestellten Förderzinken bzw. Aufnahmeelemente sind Bestandteil einer "eigentlichen" Pick-Up 100, 101, 102. Derartige Pick-Up 100 bis 102 weisen im Allgemeinen vorzugsweise vier um ca. 90° radial versetzte Zinkenreihen auf, die sich um die Drehachse 11 drehen. Häufig ist auch eine Zinkensteuerung vorgesehen, die eine mechanische Kurvenbahn oder dergleichen umfasst, so dass sich die radiale Ausrichtung der Zinken bei der Rotation um die Drehachse 11 in vorteilhafter Weise verstellt. Eine derartige Zinkensteuerung bzw. die "eigentlichen" Pick-Up 100, 101, 102 werden bislang bereits beispielsweise bei Ballenpressen, Ladewagen oder dergleichen entsprechend eingesetzt. Aufgrund dessen kann für die Pick-Up 100 bis 102 zu einem Großteil auf bereits handelsübliche Komponenten zurückgegriffen werden, wie z.B. die Zinken, die Abdeckbleche zwischen den Zinken etc..

Allerdings weisen die dargestellten Pick-Up 100 bis 102 der Vorrichtung 2 einen neuartigen Antrieb auf, da bislang bei einer einzelnen Pick-Up der Antrieb der Zinken außenseitig angeordnet war. Dies könnte zwar für die beiden äußeren Pick-Up 100 und 102 realisiert werden, jedoch nicht für die mittlere Pick-Up 100, da ansonsten der Abstand zwischen den Randzinken zweier benachbarter Pick-Up 100 bis 102 so groß werden würde, dass dazwischen Erntegut auf dem Feld liegen bleiben würde.

Aufgrund dessen wird hier ein neuartiger Antrieb 103, 104, 105 für alle drei Pick-Up 100 bis 102 verwendet, der innerhalb der jeweiligen Arbeitsbreite angeordnet ist. Die innerhalb der Arbeitsbreite der Förderzinken angeordneten Antriebe 103, 104, 105 sind lediglich beispielhaft etwa in der Mitte der jeweiligen Pick-Up 100 bis 102 angeordnet.

Vor allem in Figur 2 wird deutlich, dass das nicht näher dargestellte Erntegut beispielsweise mittels der Pick-Up 100, 101, 102 aufgenommen und unter Zuhilfenahme eines Niederhalters 106, 107, 108 in vorteilhafter Weise zu den Querförderschnecken 6 bis 8 angehoben bzw. transportiert wird. Vorteilhafterweise sind die Niederhalter 106 bis 108 derart ausgebildet, dass diese um eine Drehachse verschwenkbar und somit höhenvariabel sind und zudem mittels zweier Rollen mit nicht näher dargestellter Paddeln oder dergleichen in vorteilhafter Weise das Befördern des Erntegut zu den Querförderschnecken 6 bis 8 unterstützen bzw. sicherstellen.

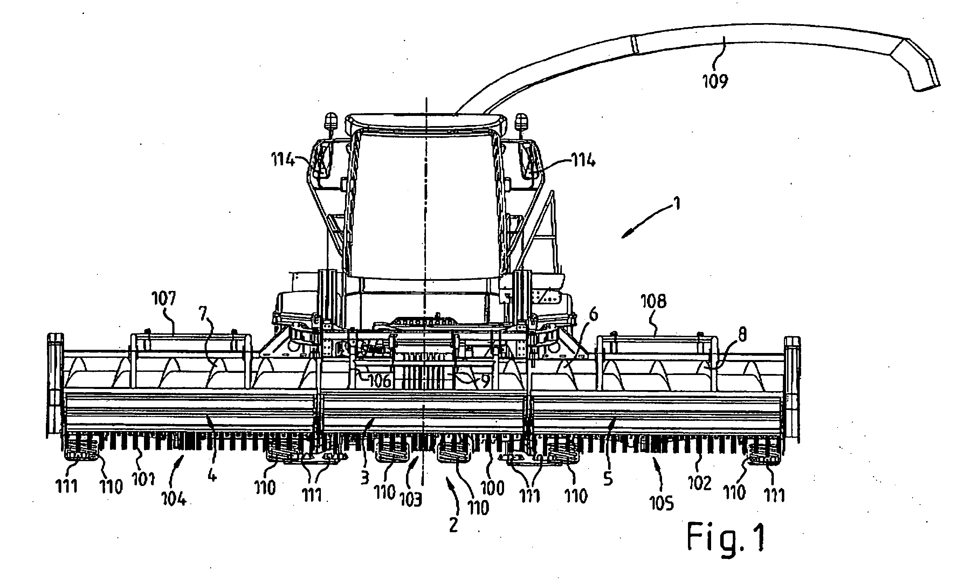

Vor allem in Figur 1 wird deutlich, dass durch die Rotation der Querförderschnecken 6 bis 8 um die Drehachse 10 in entsprechend vorteilhafter Richtung das Erntegut in die Mitte des Feldhäckslers 1 bzw. der Vorrichtung 2 befördert wird, wobei ein optional vorzusehender Einzug 9 das Erntegut entgegen der Fahrtrichtung F ins Innere des Feldhäckslers 1 befördert bzw. bei besonders großen Erntegutmengen teilweise sogar hineinpresst.

Vorteilhafterweise weist der Feldhäcksler 1 eine nicht näher dargestellte Häckselvorrichtung auf, die das Erntegut zerkleinert bzw. zerhäckselt und mittels einem Auswurfschacht 109 beispielsweise auf ein entsprechendes Transportfahrzeug befördert. Hier wird deutlich, dass das Fahrzeug bzw. der Feldhäcksler 1 als bereits derzeit vielfach im Einsatz befindlicher multifunktionaler Feldhäcksler 1, wie beispielsweise der Feldhäcksler "JAGUAR" der Anmelderin, verwendbar ist.

Darüber hinaus wird vor allem in Figur 2 deutlich, dass die Pick-Up 100 bis 102 vorteilhafte Stützräder 110 sowie Gleitstützen 111 aufweisen, wodurch in vorteilhafter Weise eine Abstützung der Einheiten 3 bis 5 sowie eine sogenannte Bodenkopierung dieser realisiert wird.

Generell können die Pick-Up 100 bis 102 in vorteilhafter Weise an einer drehbar ausgebildeten Schwinge oder dergleichen angeordnet werden, so dass die einzelnen Pick-Up 100 bis 102 mittels der jeweiligen Schwingen an Bodenunebenheiten während der Arbeitsphase angepasst werden können. Generell ist denkbar, dass auch je Einheit 3, 4, 5 auch zwei separat schwingbare bzw. höhenvariable Pick-Up oder auch mehr, verwendet werden können, um die Bodenanpassung gegebenenfalls noch weiter zu verbessern.

Aus den Figuren 1 und 2 wird zudem deutlich, dass die Drehachsen 10 und 11 der Pick-Up 100 bis 102 sowie der Querförderschnecken 6 bis 8 in Ruhestellung während der Arbeit auf gleicher Höhe bzw, fluchtend angeordnet sind. Gerade Figur 2 verdeutlicht, wie nahe die Vorrichtung 2 und somit der gemeinsame Schwerpunkt aller Einheiten 3 bis 5 am Feldhäcksler 1 bzw. an der Vorderradachse 112 angeordnet ist. Hierdurch ergibt sich eine besonders kompakte und wendige Fahrzeugseinheit während der Arbeit. Zudem wird auch die Achslast an den Vorderrädern während der Arbeit minimiert. Bei einem derartigen Fahrzeug, wie abgebildet, sitzt auch der Fahrer in seiner Kabine 113 unmittelbar nahe an der Erntegutaufnahmestelle bzw. unmittelbar über der Vorrichtung 2, so dass dieser den relevanten Arbeitsbereich der Vorrichtung 2 trotz der sehr großen Arbeitsbreite außerordentlich gut einsehen kann.

Grundsätzlich ist es bei derart großen Arbeitsbreiten von Vorteil, beispielsweise eine Bestandkantenerkennung und/oder ein Hinderniserkennungssystem und/oder ein Metalldetektor und/oder ein Ortungssystem, insbesondere ein GPS-System etc., oder dergleichen zum Schutz der Komponenten bzw. zur Automatisierung und Effizienzsteigerung der Erntegutaufnahme vorzusehen.

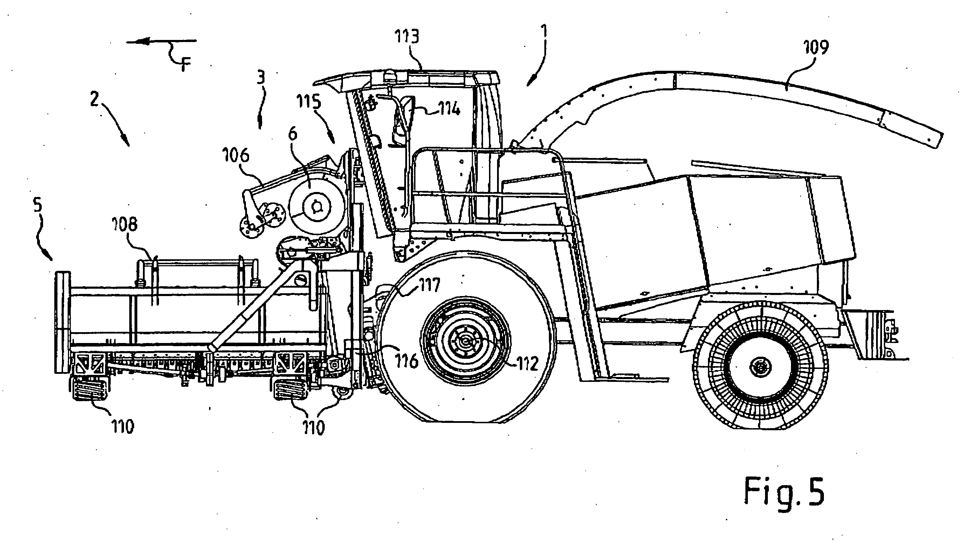

Darüber hinaus wird vor allem in Figur 5 deutlich, dass in der Transportstellung die Einheiten 3 bis 5 und somit deren Schwerpunkt ebenfalls sehr nahe an der Vorderradachse 112 bzw. an der Fahrkabine 113 angeordnet sind. Dementsprechend kompakt ist die Fahrzeugeinheit auch in der Transportphase und zudem wird auch die Achslast der Vorderachse 112 entsprechend minimiert. Weiterhin wird deutlich, dass der nicht näher dargestellte Fahrer in seiner Kabine 113, der etwa in Höhe der abgebildeten Spiegel 114 aus der Kabine 113 blickt, auch in der Transportstellung der Vorrichtung 2 sehr gut die Straße einsehen kann.

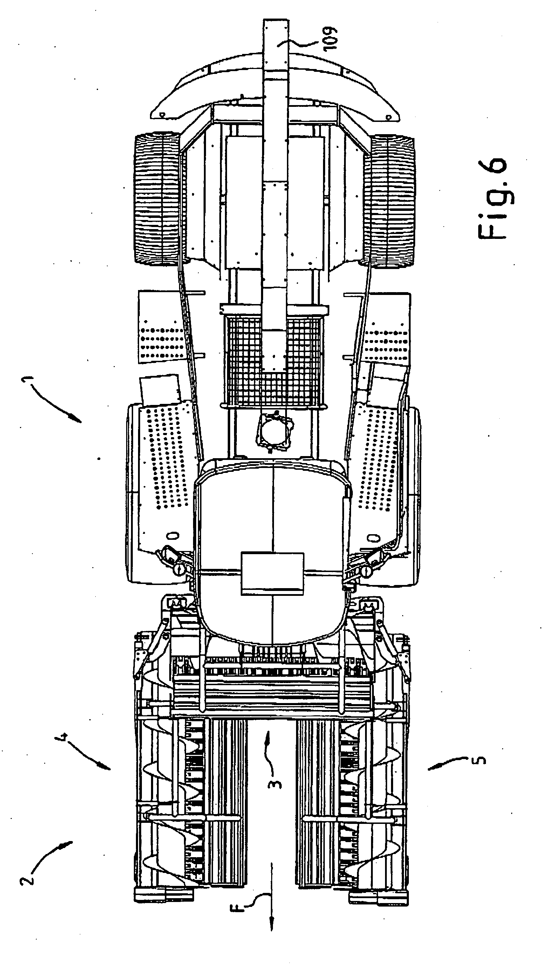

Die Verstellbarkeit der Vorrichtung 2 von der in Figur 1 dargestellten Arbeitsstellung in eine in den Figuren 5 und 6 dargestellte Transportstellung der Vorrichtung 2 wird nachfolgend näher erläutert.

Gemäß der Erfindung weist die Vorrichtung 2 eine Hubmechanik bzw. einen Lift 115 für die zentrale Einheit 3 auf. Der Lift 115 weist vorteilhafterweise zwei Führungsschienen 116 auf, entlang derer die zentrale Einheit 3 im wesentlichen geradlinig verstellbar angeordnet ist. Ohne nähere Darstellungen sind insbesondere zwei in vorteilhafter Weise synchronisierte Hubeinheiten, insbesondere Hydraulikzylinder, vorgesehen, die die Verstellung der zentralen Einheit 3 längs der Führungsschienen 116 ermöglichen. Mittels entsprechender hydraulischer Hubkomponenten kann mit bei bereits handelsüblichen Feldhäckslern 1 vorhandenen Hydraulikkupplungen die entsprechende Hebe- und/oder Senkearbeit umgesetzt werden.

Bei den dargestellten Führungsschienen 116 handelt es sich im Wesentlich um etwa U-förmige Führungsschienen 116, die vor allem eine Wälzlagerführung, aber auch zum Teil eine Gleitführung der zentralen Einheit 3 realisieren. Grundsätzlich ist ein Gleichlauf bei der Verwendung zweier Hubsysteme bzw. Hydraulikzylinder gerade bei derart großen bzw. schweren Einheiten 3 bis 5 von großem Vorteil. Dies kann beispielsweise mittels einer hydraulischen und/oder einer elektronischen Kopplung realisiert werden. Mit der Verwendung von Hydraulikzylindern oder dergleichen können diese innerhalb der Führungsschienen 116 angeordnet werden, was eine besonders Platz sparende Bauweise ermöglicht.

Im Vergleich der beiden Figuren 2 und 5 wird deutlich, dass der Feldhäcksler 1 eine um eine Drehachse drehbare Schwinge 117 aufweist, an die die Vorrichtung 2 in vorteilhafter Weise angekoppelt ist. Die Schwinge 117 ist bereits bei handelsüblichen Feldhäcksern 1 wie beim bereits erwähnten "JAGUAR" der Anmelderin vorhanden und weist neben Hydraulikanschlussmöglichkeiten auch wenigstens eine Kopplungsstelle zur Übertragung rotatorischer Energie, eine sogenannte Zapfwelle oder dergleichen, auf. Mittels dieser Zapfwelle wird insbesondere der Antrieb der Pick-Up 100 bis 102 sowie der Querförderschnecken 6 bis 8 einschließlich des Einzugs 9 realisiert.

Um die vertikale Verstellung der zentralen Einheit 3 zu realisieren, weist der nicht näher dargestellte Antrieb eine Längenveränderung auf. Beispielsweise eine Klauenkupplung oder dergleichen, die in der Transportstellung außer Eingriff ist, und/oder eine teleskopierbare Antriebswelle.

Die Verfahrensschritte um von der Arbeitsstellung gemäß Figur 1 in die Transportstellung gemäß Figur 5 zu gelangen erfolgt im Wesentlichen in der Weise:

Im Allgemeinen wird die Schwinge 117 des Feldhäckslers 1 unmittelbar nach der Beendigung der Erntegutaufnahme angehoben, so dass die gesamte Vorrichtung 2 vom Boden abhebt, d.h. dass die Stützräder 110 bzw. die Gleitstützen 111 nicht mehr Kontakt zum Boden haben. Hierdurch werden die Führungsschienen 116 im dargestellten Ausführungsbeispiel in nahezu vertikaler Orientierung ausgerichtet.

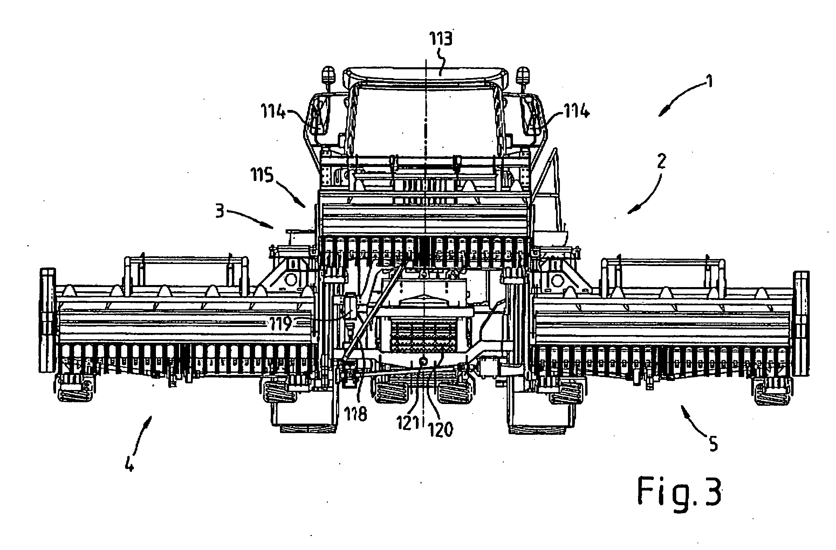

Anschließend wird die zentrale Einheit 3 längs der Führungsschienen 116 nach oben verstellt, wie dies vor allem in Figur 3 deutlich wird. In dieser Figur werden weitere Komponenten der Vorrichtung 2 sichtbar. Hierzu gehört eine längenveränderbare Antriebswelle 118 sowie eine außer Eingriff gesetzte Klauenkupplung 119. Weiterhin werden Einzugswalzen 120 des Feldhäckslers 1 für das Erntegut sichtbar. Darüber hinaus wird auch eine Schwenkachse 121 sichtbar, um die die gesamte Vorrichtung 2 zum Ausgleich von Unebenheiten des Bodens relativ zum Fahrzeug verschwenken kann. Beispielsweise wird eine Pendelbewegung von insgesamt etwa 10° realisiert.

In Figur 3 ist die zentrale Einheit bis zum maximalen Punkt angehoben, so dass nachfolgend die beiden Seiteneinheiten 4 und 5 jeweils um eine Schwenkachse 122 verschwenkt werden können. Hierfür sind vorteilhafte Antriebe bzw. hydraulische Zylinder 123 vorgesehen.

Die beiden Seiteneinheiten 4 und 5 verschwenken im Wesentlichen bis diese etwa in Fahrtrichtung ausgerichtet sind. Anschließend kann die zentrale Einheit bei Bedarf etwas abgesenkt werden, bis diese vorzugsweise mittels entsprechender Anschlagelemente auf den beiden Seitenteilen 4 und 5 aufsetzen. Hierdurch wird eine besonders kompakte und stabile Anordnung der großen und schweren Einheiten 3 bis 5 in der Transportphase realisiert.

Darüber hinaus kann in der Transportstellung beispielsweise stirnseitig eine an den beiden Seiteneinheiten 4 und 5 angeordnete Verriegelungsstange bzw. ein Verriegelungselement vorgesehen werden, so dass ein unbeabsichtigtes Aufschwenken der beiden Seiteneinheiten 4 oder 5 während der Fahrt sicher verhindert wird. Dies erhöht die Sicherheit in der Transportphase.

Grundsätzlich können auch andere Ausführungsvarianten als Einheiten 3 bis 5 realisiert werden. Beispielsweise kann ein standardisierter Lift 115 für unterschiedlichste Arbeitsgeräte verwendet werden, so dass die Stückzahl bei der Herstellung für entsprechender Lifte 115 vergrößert wird, was sich wirtschaftlich günstig auswirkt. Beispielsweise kann ein entsprechender Lift 115 nicht nur für Pick-Up 100 bis 102 oder Mähwerke verwendet werden, sondern auch für Maiserntegeräte, insbesondere zum Ernten der Maispflanzen für Silagezwecke oder auch zum Ernten der Maiskörner mittels entsprechender Dreschvorrichtungen. Es ist sogar denkbar, dass die Vorrichtung 2 wenigstens zwei Kreiselrechen zum Zetten von Erntegut oder zum Schwaden vorzugsweise mit gleichzeitiger Aufnahme des Erntegutes aufweist.

### Bezugszeichenliste:

- 1: Feldhäcksler
- 2: Vorrichtung
- 3: Zentrale Einheit
- 4: Seiteneinheit
- 5: Seiteneinheit
- 6: Querförderschnecke
- 7: Querförderschnecke
- 8: Querförderschnecke
- 9: Einzug
- 10: Drehachse
- 11: Drehachse
- 100: Pick-Up
- 101: Pick-Up
- 102: Pick-Up
- 103: Antrieb
- 104: Antrieb
- 105: Antrieb
- 106: Halter
- 107: Halter
- 108: Halter
- 109: Auswurf
- 110: Stützrad
- 111: Gleitstütze
- 112: Achse
- 113: Kabine
- 114: Spiegel
- 115: Lift
- 116: Schiene
- 117: Schwinge
- 118: Welle
- 119: Kupplung
- 120: Walzen
- 121: Achse
- 122: Achse
- 123: Zylinder

- F: Fahrtrichtung

## Patentansprüche

1. Vorrichtung (2) zum Bearbeiten eines landwirtschaftlichen Feldes und/oder von auf dem Feld angeordneten Pflanzen, insbesondere zur frontseitigen Anordnung an einem landwirtschaftlichen Fahrzeug (1), mit einer ersten, wenigstens ein erstes Arbeitsorgan (100, 101, 102) aufweisenden Arbeitseinheit (3, 4, 5) und einer zweiten, wenigstens ein zweites Arbeitsorgan (100, 101, 102) aufweisenden Arbeitseinheit (3, 4, 5), wobei die Arbeitseinheiten (3, 4, 5) in Arbeitsstellung quer zur Fahrtrichtung (F) seitlich wenigstens teilweise versetzt zueinander angeordnet sind, wobei die Arbeitseinheiten (3, 4, 5) in Transportstellung wenigstens teilweise übereinander angeordnet sind und wobei wenigstens eine Verstelleinrichtung (115, 122, 123) zum Verstellen der Arbeitseinheiten (3, 4, 5) zwischen Arbeitsstellung und Transportstellung vorgesehen ist, wobei die Verstelleinrichtung (115, 122, 123) wenigstens eine Lineareinheit (115) zur im Wesentlichen geradlinigen Translation wenigstens einer der Arbeitseinheiten (3, 4, 5) aufweist, wobei die Lineareinheit (115) als Hubeinheit (115) zum im Wesentlichen vertikalen Anheben einer der Arbeitseinheiten (3, 4, 5) ausgebildet ist, **dadurch gekennzeichnet, dass** in Transportstellung die zweite und eine dritte, wenigstens ein drittes Arbeitsorgan (101, 102) aufweisende Arbeitseinheit (4, 5) im Wesentlichen in Fahrtrichtung (F) ausgerichtet sind.

2. Vorrichtung nach Anspruch 1, **dadurch gekennzeichnet, dass** die Verstelleinrichtung (115, 122, 123) wenigstens eine Schwenkeinheit (122, 123) zum Verschwenkten wenigstens einer der Arbeitseinheiten (3, 4, 5) um eine Schwenkachse (122) aufweist.

3. Vorrichtung nach einem der vorgenannten Ansprüche, **dadurch gekennzeichnet, dass** die Arbeitsbreite der ersten Arbeitseinheit (3) im Wesentlichen deren Transportbreite entspricht.

4. Vorrichtung nach einem der vorgenannten Ansprüche, **dadurch gekennzeichnet, dass** in Arbeitsstellung an der ersten Arbeitseinheit (3) quer zur Fahrtrichtung (F) seitlich wenigstens teilweise versetzt zueinander eine dritte, wenigstens ein drittes Arbeitsorgan (101, 102) aufweisende Arbeitseinheit (4, 5) angeordnet ist.

5. Vorrichtung nach einem der vorgenannten Ansprüche, **dadurch gekennzeichnet, dass** die Arbeitseinheiten (3, 4, 5) wenigstens in Arbeitsstellung im Wesentlichen auf einer Höhe bezogen auf die Fahrtrichtung (F) angeordnet sind.

6. Vorrichtung nach einem der vorgenannten Ansprüche, **dadurch gekennzeichnet, dass** die Transportbreite der Vorrichtung (2) im Wesentlichen der Breite des dafür vorgesehenen Fahrzeugs (1) entspricht.

7. Vorrichtung nach einem der vorgenannten Ansprüche, **dadurch gekennzeichnet, dass** die Arbeitseinheiten (3, 4, 5) als Aufnahmeeinheiten (3, 4, 5) mit jeweils wenigstens eine Mehrzahl über deren Arbeitsbreite verteilte= und in Arbeitsstellung um eine quer zur Fahrtrichtung ausgerichtete Drehachse (11) umlaufender sowie voneinander beabstandeter Aufnahmeelemente zum Aufnehmen von an Boden liegendem Erntegut ausgebildet sind.

8. Vorrichtung nach einem der vorgenannten Ansprüche, **dadurch gekennzeichnet, dass** die Arbeitseinheiten (3, 4, 5) als Mähwerke ausgebildet sind.

9. Vorrichtung nach einem der vorgenannten Ansprüche, **dadurch gekennzeichnet, dass** die Arbeitseinheiten (3, 4, 5) als Mäh- und Einzugseinheiten mit in Arbeitsstellung um im Wesentlichen vertikal ausgerichtete Drehachsen drehende Mäh- und Einzugswerkzeugen ausgebildet sind.

10. Vorrichtung nach einem der vorgenannten Ansprüche, **dadurch gekennzeichnet, dass** wenigstens eine Querfördereinheit (6, 7, 8) zum wenigstens teilweise quer zur Fahrtrichtung (F) gerichteten Fördern der Pflanzen bzw. von Erntegut vorgesehen ist.

11. Vorrichtung nach einem der vorgenannten Ansprüche, **dadurch gekennzeichnet, dass** die Querfördereinheit (6, 7, 8) wenigstens eine in Arbeitsstellung um eine quer zur Fahrtrichtung ausgerichtete Rotationsachse (10) rotierende Förderschnecke (6, 7, 8) aufweist.

12. Landwirtschaftliches Fahrzeug (1), **dadurch gekennzeichnet, dass** es eine Vorrichtung (2) nach einem der vorgenannten Ansprüche aufweist.

13. Landwirtschaftliches Fahrzeug (1) nach dem vorgenannten Anspruch, **dadurch gekennzeichnet, dass** eine Häckselvorrichtung zum Häckseln der Pflanzen bzw. des Ernteguts vorgesehen ist.

14. Landwirtschaftliches Fahrzeug (1) nach einem der vorgenannten Ansprüche, **dadurch gekennzeichnet, dass** eine Dreschvorrichtung zum Dreschen der Pflanzen bzw. des Ernteguts vorgesehen ist.

## Claims

1. Device (2) for cultivating an agricultural field and/or plants on the field, in particular for attachment to the front of an agricultural vehicle (1), comprising a first working unit (3, 4, 5) comprising at least one first working element (100, 101, 102) and a second working unit (3, 4, 5) comprising at least one second working element (100, 101, 102), wherein the working units (3, 4, 5) are arranged in working position perpendicular to the travelling direction (F) and laterally offset relative to one another at least partly, wherein the working units (3, 4, 5) are arranged above one another in transport position at least partly, and wherein at least one adjusting device (115, 122, 123) is provided for adjusting the working units (3, 4, 5) between the working position and transport position, wherein the adjusting device (115, 122, 123) comprises at least one linear unit (115) for the essentially linear translation of at least one of the working units (3, 4, 5), wherein the linear unit (115) is configured as a lifting unit (115) for the essentially vertical lifting of one of the working units (3, 4, 5), **characterised in that** in the transport position the second and a third working unit (4, 5) comprising at least one third working element (101, 102) are aligned essentially in travelling direction (F).

2. Device according to claim 1, **characterised in that** the adjusting device (115, 122, 123) comprises at least one pivot unit (122, 123) for pivoting at least one of the working units (3, 4, 5) about a pivot axis (122).

3. Device according to any one of the preceding claims, **characterised in that** the working breadth of the first working unit (3) corresponds essentially to its transport width.

4. Device according to any one of the preceding claims, **characterised in that** a third working unit (4, 5) comprising at least one third working element (101, 102) is arranged in working position on the first working unit (3) perpendicular to the travelling direction (F) at least partly offset laterally.

5. Device according to any one of the preceding claims, **characterised in that** the working units (3, 4, 5) are arranged in working position essentially at one height relative to the travelling direction (F).

6. Device according to any one of the preceding claims, **characterised in that** the transport breadth of the device (2) corresponds essentially to the width of the vehicle (1) provided therefor.

7. Device according to any one of the preceding claims, **characterised in that** the working units (3, 4, 5) are configured as mounting units (3, 4, 5) each with at least a plurality of mounting elements distributed over the working breadth and rotating in working position about a rotational axis (11) perpendicular to the travelling direction and spaced apart from one another for gathering the harvest lying on the ground.

8. Device according to any one of the preceding claims, **characterised in that** the working units (3, 4, 5) are configured as mowing units.

9. Device according to any one of the preceding claims, **characterised in that** the working units (3, 4, 5) are configured as mowing and gathering units with mowing and gathering tools rotating in working position about essentially vertically aligned axes of rotation.

10. Device according to any one of the preceding claims, **characterised in that** at least one transverse conveying unit (6, 7, 8) is provided for conveying the plants or harvest at least partly perpendicular to the travelling direction (F).

11. Device according to any one of the preceding claims, **characterised in that** the transverse conveying unit (6, 7, 8) comprises at least one screw conveyor (6, 7, 8) rotating in working position about an axis of rotation (10) aligned perpendicular to the travelling direction.

12. Agricultural vehicle (1), **characterised in that** it comprises a device (2) according to any one of the preceding claims.

13. Agricultural vehicle (1) according to the preceding claim, **characterised in that** a chaffing device is provided for chaffing the plants or the harvest.

14. Agricultural vehicle (1) according to any one of the preceding claims, **characterised in that** a threshing device is provided for threshing the plants or the harvest.

## Revendications

1. Dispositif (2) pour moissonner un champ agricole et/ou récolter les végétaux cultivés sur le champ, destiné en particulier à être agencé sur la face frontale d'un véhicule agricole (1), comportant une première unité de travail (3, 4, 5) munie d'au moins un premier organe de travail (100, 101, 102), et une deuxième unité de travail (3, 4, 5) munie d'au moins un deuxième organe de travail (100, 101, 102), lesdites unités de travail (3, 4, 5) dans la position de travail étant décalées latéralement au moins en partie l'une par rapport à l'autre et transversalement la direction de déplacement (F) du véhicule, lesdites unités de travail (3, 4, 5) dans la position de transport étant disposées au moins en partie l'une au-dessus de l'autre, et au moins un dispositif de manoeuvre (115, 122, 123) étant prévu pour manoeuvrer les unités de travail (3, 4, 5) entre la position de travail et la position de transport, ledit dispositif de manoeuvre (115, 122, 123) comportant au moins une unité linéaire (115) pour manoeuvrer au moins une des unités de travail (3, 4, 5) dans un mouvement de translation sensiblement rectiligne, ladite unité linéaire (115) étant réalisée sous forme d'unité de levage (115) pour relever au moins sensiblement verticalement une des unités de travail (3, 4, 5), **caractérisé en ce que**, dans la position de transport, la deuxième et une troisième unité de travail (4, 5), munie d'au moins un troisième organe de travail (101, 102), sont orientées sensiblement dans la direction de déplacement (F) du véhicule.

2. Dispositif selon la revendication 1, **caractérisé en ce que** le dispositif de manoeuvre (115, 122, 123) comporte au moins une unité de pivotement (122, 123) pour faire pivoter au moins une des unités de travail (3, 4, 5) autour d'un axe de pivotement (122).

3. Dispositif selon l'une quelconque des revendications précédentes, **caractérisé en ce que** la largeur de travail de la première unité de travail (3) correspond sensiblement à la largeur de transport de celle-ci.

4. Dispositif selon l'une quelconque des revendications précédentes, **caractérisé en ce que**, dans la position de travail, une troisième unité de travail (4, 5), munie d'au moins un troisième organe de travail (101, 102), est disposée sur la première unité de travail (3), lesdites deux unités de travail étant décalées latéralement au moins en partie l'une par rapport à l'autre et transversalement à la direction de déplacement (F) du véhicule.

5. Dispositif selon l'une quelconque des revendications précédentes, **caractérisé en ce que** les unités de travail (3, 4, 5), au moins dans la position de travail, sont disposées sensiblement sur une même hauteur par rapport à la direction de déplacement (F) du véhicule.

6. Dispositif selon l'une quelconque des revendications précédentes, **caractérisé en ce que** la largeur de transport du dispositif (2) correspond sensiblement à la largeur du véhicule (1) prévu pour ledit dispositif.

7. Dispositif selon l'une quelconque des revendications précédentes, **caractérisé en ce que** les unités de travail (3, 4, 5) sont réalisées sous forme d'unités de ramassage (3, 4, 5) comportant chacune au moins une pluralité d'éléments de ramassage destinés à ramasser la récolte disposée sur le sol et répartis sur la largeur de travail desdites unités de ramassage, lesdits éléments de ramassage, dans la position de travail, étant mis en rotation autour d'un axe de rotation (11), orienté transversalement à la direction de déplacement du véhicule, et étant écartés les uns des autres.

8. Dispositif selon l'une quelconque des revendications précédentes, **caractérisé en ce que** les unités de travail (3, 4, 5) sont réalisées sous forme de mécanismes de fauchage.

9. Dispositif selon l'une quelconque des revendications précédentes, **caractérisé en ce que** les unités de travail (3, 4, 5) sont réalisées sous forme d'unités de fauchage et d'unités de récolte avec des outils de fauchage et des outils de récolte entraînés en rotation, dans la position de travail, autour d'axes de rotation orientés sensiblement verticalement.

10. Dispositif selon l'une quelconque des revendications précédentes, **caractérisé en ce qu'**il est prévu au moins une unité de convoyage transversal (6, 7, 8) destinée à convoyer au moins en partie transversalement à la direction de déplacement (F) du véhicule les végétaux ou produits récoltés.

11. Dispositif selon l'une quelconque des revendications précédentes, **caractérisé en ce que** l'unité de convoyage transversal (6, 7, 8) comporte au moins une vis de convoyage (6, 7, 8) entraînée en rotation, dans la position de travail, autour d'un axe de rotation (10) orienté transversalement à la direction de déplacement du véhicule.

12. Véhicule agricole (1), **caractérisé en ce qu'**il comporte un dispositif (2) selon l'une quelconque des revendications précédentes.

13. Véhicule agricole (1) selon la revendication précédente, **caractérisé en ce qu'**il est prévu un dispositif de hachage pour hacher les végétaux ou les produits récoltés.

14. Véhicule agricole (1) selon l'une quelconque des revendications précédentes, **caractérisé en ce qu'**il est prévu un dispositif de battage pour le battage des végétaux ou des produits récoltés.
